# EUROPEAN PATENT SPECIFICATION

(11) **EP 1 194 258 B1**
(45) Date of publication and mention of the grant of the patent: **01.09.2004**
(21) Application number: 00944636.0
(22) Date of filing: 09.06.2000
(51) Int. Cl.: B23C 1/02, B23Q 5/00

(54) **MACHINE TOOL DRIVE SYSTEM**
ANTRIEBSSYSTEM EINER WERKZEUGMASCHINE
SYSTEME D'ENTRAINEMENT D'UNE MACHINE-OUTIL

(30) Priority: 11.06.1999 US 139059 P; 11.06.1999 US 139069 P
(43) Date of publication of application: 10.04.2002
(73) Proprietor: Unova IP Corp., Everett Washington 98203-1264 (US)
(72) Inventor: CURLESS, Richard, A., Loveland, OH 45140 (US)
(74) Representative: Lally, William
(86) International application number: PCT/US2000/015917
(87) International publication number: WO 2000/076704

(56) References cited:
- EP-A- 1 050 364
- US-A- 4 792 267
- US-A- 5 368 425
- US-A- 5 662 568
- US-A- 5 688 084

## Description

### BACKGROUND OF THE INVENTION

The present invention relates to machine tools employing movable columns for supporting tool spindles. More particularly, the present invention relates to a machine tool employing a movable column for supporting a tool spindle, wherein the movable column is adapted to be driven at high rates of acceleration.

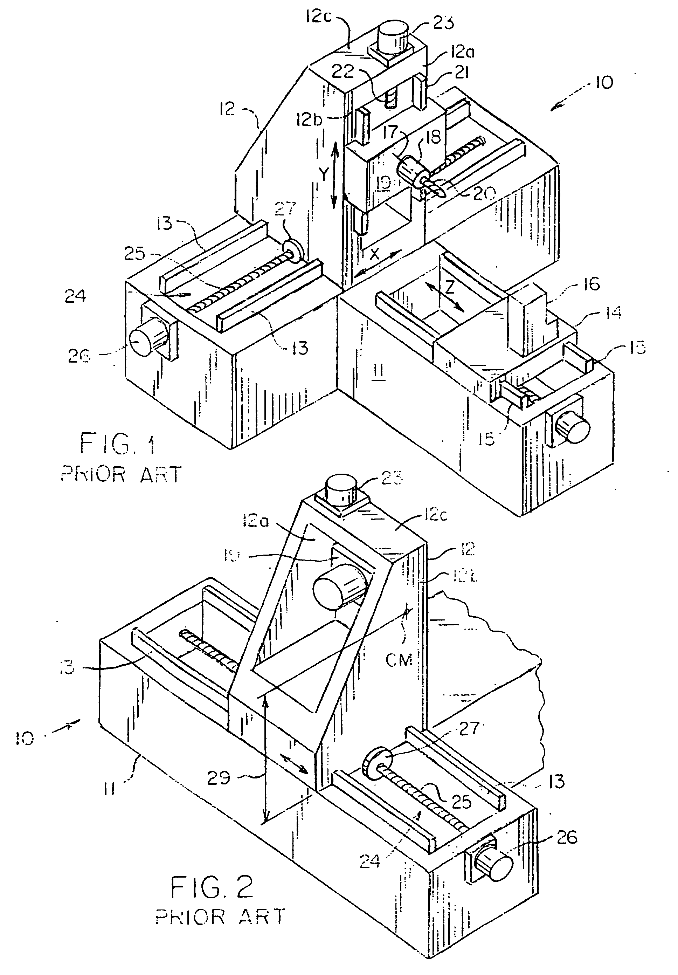

With reference to Figures 1 and 2, a conventional machine tool 10 typically includes a vertical column 12 extending upwardly from a substantially horizontal way support system in the form of one or more parallel column rails 13 of a machine base 11. The column 12 is an elongate, vertically-oriented structure, mounted at a lowermost end thereof to the machine base 11 and is movable relative to the machine base 11 along a substantially-horizontal "X"-axis direction. The column 12 includes vertical ways in the form of one or more parallel spindle rails 21 for slidably supporting a spindle carrier 19 for vertical movement of a spindle 18 mounted thereto along a substantially-vertical "Y"-axis direction.

Typically, a horizontal linear drive system 24 is mounted to the base 12 and is positioned near the horizontal way support system, for example, between the rails 13. The drive system 24 is fixedly connected to the lowermost end of the column 12 to propel the column 12 along the rails 13 in the "X"-direction. The rails 13 are fixedly mounted to the machine base 11 and are slidably engaged by bearing tracks 13a provided in the lowermost end of the column 12 to thereby permit sliding motion of the column 12 along the rails 13.

The linear drive system 24 is typically a conventional ballscrew assembly including an elongate screw 25 rotatably positioned between the rails 13, such as, by conventional bearings (not shown), and connected at one end thereof to a rotary servomotor 26. A drive nut 27 is fixedly secured to the lowermost end of the column 12 such that, as the nut 27 positively engages the screw 25, rotation of the screw 25 causes linear translation of the nut 27 along the rails 13, and thereby causes translation of the column 12 along the rails 13.

Because the drive system 24 is positioned between the rails 13, such a system 24 effectively prevents skewing or binding of the column 12, relative to the rails 13, particularly where high frictional forces are created between the respective bearing surfaces of the rails 13 of the base 11 and the tracks 13a of the column 12, when the column 12 is driven at moderate velocities and accelerations. The column 12 of a conventional machine tool typically moves along the rails 13 at velocities in the range of about 500 ft/min to about 1000 ft/min (about 166 m/min to about 332 m/min) and at accelerations far less than ±1G (about 32.2 ft/sec² or about 9.81 m/sec²). However, it is desirable to provide a drive system which is capable of driving the column 12 at accelerations in excess of ±1G.

Recent developments in the design of high-speed, high-acceleration linear drives, such as, for example, linear motors, have made it desirable to utilize the high acceleration rates of such linear drives to drive the column 12 of a machine tool 10 at accelerations in excess of ±1G. However, driving the column 12 at accelerations in excess of ±1G by exerting a high-magnitude driving force to the lowermost end of the column 12 may cause the spindle 18, which is positioned a vertical distance above the lowermost end of the column 12, to whip, flex, deflect or lag slightly behind the direction of movement of the column 12 along the "X"-axis, due to the high inertia typical of most machine tool columns, which is due to the elevated center of mass CM thereof, thereby leading to positioning errors of the spindle 18. An inertial "lag" force, then, created thereby opposes the direction of movement of the column 12 along the "X"-axis, and has the effect of imparting an inertial moment equal to the magnitude of the inertial force times a distance 29 between the center of mass CM of the column 12 and the lowermost end thereof, where the column 12 is supported on the rails 13. Clearly, as the spindle 18 moves farther vertically above the rails 13, the center of mass CM of the column 12 moves farther vertically above the rails 13 and the inertial moment increases, thereby increasing the likelihood that the column 12 may become skewed on the rails 13, possibly binding the column 12 to the rails 13 and inhibiting relative motion therebetween. At the very least, the inertial moment imparts significant stresses on the bearing surfaces of the rails 13 and the tracks 13a, thereby leading to lower operating efficiency, increased part wear and increased frequency and magnitude of positioning errors. It is therefore desirable to provide a drive system to drive the column 12 at accelerations in excess of ±1G, wherein the drive system is adapted to engage the column 12 such that the binding effect of the inertial moment on the rails 13 is minimized.

U.S. Patent No. 5,368,425 to Mills, et al., disclosing the closest prior art according to the preamble of claim 1, teaches a multi-axis machine for positioning a rotary-driven spindle using linear motors. For example, Mills '425 teaches using two linear motors mounted side-by-side between two guide rails upon which an upright column is translatably supported. Two linear motors are used to obtain the required thrust forces and to evenly distribute the thrust forces, relative to the guide rails. However, the distance between the center of mass of the column and the location on the column where the linear motors apply parallel driving forces is substantially the same as the distance between the center of mass of the column and the guide rails. It is therefore even further desirable to provide a drive system to drive the column at accelerations in excess of ±1G, wherein the drive system engages the column at a location, relative to the center of mass thereof, such that the likelihood of any portion of the column to "lag" behind the high-acceleration movement thereof is minimized.

U.S. Patent No. 5,662,568 to Lindem teaches using two separate linear motors to drive a vertical column of a machine tool, whereby a first linear motor is connected to, and drives, a lower end of the column and a second linear motor is connected to, and drives, an upper end of the column. The distance between the center of mass of the column and the location where the driving force is applied, for example, the lower end of the column, is the same as taught by Mills '425; however, because Lindem '568 provides a second driving force in the form of the second linear motor mounted to the upper end of the column, a second inertial moment is created thereby, opposite in direction to the inertial moment created by the driving force of the first linear motor, which tends to cancel or to offset the inertial moment created by the first linear motor, thereby reducing the likelihood that any portion of the column will "lag" behind the high-acceleration movement thereof. However, it is even further desirable to provide a drive system to drive a machine tool column at high rates of acceleration, wherein the inertial forces which are generated by driving the column at high rates of acceleration are minimized by applying the driving force to the column at a location thereon near the center of mass thereof.

It is also desirable to provide a drive system to drive a column at high rates of acceleration, wherein the drive system may be retrofitted relatively easily to a conventional machine tool column.

### SUMMARY OF THE INVENTION

The present invention, as defined in claim 1, is for a drive system to drive an upright column of a machine tool along one or more rails orientated along a horizontal axis at high rates of acceleration, wherein the drive system engages the column such that the inertial effects of driving the column at high rates of acceleration are minimized, thereby reducing or eliminating the likelihood of any portion of the column to "lag" behind the high-acceleration movement thereof.

A drive mechanism, such as a linear ballscrew device or a linear servomotor, is mounted to the machine tool such that the drive mechanism applies a driving force to the upright column of the machine tool near the center of mass thereof. Because the driving force is applied to the column near the center of mass thereof, an inertial moment arm, which is measured as the distance between the location on the column where the driving force is applied and the center of mass thereof, is minimized. Accordingly, only a minimal inertial moment is created upon driving the column at a high rate of acceleration and the binding effect of the inertial moment on the rails is thereby minimized.

It is an object of the present invention to provide a drive system which is capable of driving the column at accelerations in excess of ±1G.

It is another object of the present invention to provide a drive system to drive the column along a way support system at accelerations in excess of ±1G, wherein the drive system is adapted to engage the column such that the binding effect of the column on the way support system caused by inertial forces is minimized.

It is still another object of the present invention to provide a drive system to drive the column at accelerations in excess of ±1G, wherein the drive system engages the column at a location, relative to the center of mass of the column, such that the likelihood of any portion of the column to "lag" behind the high-acceleration movement thereof is minimized.

It is yet another object of the present invention to provide a drive system to drive a machine tool column at high rates of acceleration, wherein the inertial forces which are generated by driving the column at high rates of acceleration are minimized by applying the driving force to the column at a location thereon near the center of mass thereof.

It is still another object of the present invention to provide a drive system to drive a column at high rates of acceleration, wherein the drive system may be retrofitted relatively easily to a conventional machine tool column.

These and other objects, features and advantages of the present invention will become apparent to those reasonably skilled in the art upon reading the description which follows, and may be realized by means of the instrumentalities and combinations particularly pointed out in the claims appended hereto without departing from the scope of the present invention.

According to the present invention, a machine tool is provided hereby, comprising a base having a way support system, a column moveable along said way support system, so as to allow machining at different regions of a workpiece, said column having a centre of mass (CM) spaced from said way support system by a first distance, and a drive mechanism for moving the column along said way support system, the drive mechanism being coupled to said column at a location thereon, said location being spaced from said centre of mass (CM) by a second distance, characterized in that said second distance is less than said first distance.

### BRIEF DESCRIPTION OF THE DRAWINGS

A better understanding of the present invention will be had upon reference to the following description in conjunction with the accompanying drawings in which like numerals refer to like parts, and wherein:
Figure 1 is a front perspective view of a conventional machine tool of the prior art;
Figure 2 is a rear perspective view of the machine tool of Figure 1;
Figure 3 is a rear perspective view of the machine tool of Figure 1, showing an inertial drive affixed thereto according to a preferred embodiment of the present invention;
Figure 4 is a side elevation view of the machine tool of Figure 3;
Figure 5 is a partial sectional view of the machine tool of Figure 3, shown along section line 5-5 of Figure 3;
Figure 6 is a rear perspective view of the machine tool of Figure 1, showing an inertial drive affixed thereto according to an alternative embodiment of the present invention;
Figure 7 is a side elevation view of the machine tool of Figure 6; and,
Figure 8 is a partial sectional view of the machine tool of Figure 6, shown along section line 8-8 of Figure 6.

### DETAILED DESCRIPTION OF THE PREFERRED EMBODIMENTS

With reference to Figure 1, a machine tool 10 of the prior art, such as a machining center 10, includes a base 11 for supporting a horizontally-movable column 12 extending upwardly from a horizontal way support system in the form of one or more parallel column rails 13 fixedly mounted on the base 11. The base 11 permits movement of the column 12 along the rails 13 along a substantially-horizontal "X"-axis direction. The base 11 also supports a movable worktable 14 on horizontal table support ways in the form of one or more parallel table rails 15 for providing movement of the worktable 14 (and of a workpiece 16 situated thereon) towards and away from the column 12 along a substantially-horizontal "Z"-axis direction. The "Z"-axis is perpendicular to the "X"-axis and is parallel to a longitudinal axis 17 of a machine spindle 18, which is rotatably carried on a spindle carrier 19. The spindle 18 includes a conventional chucking mechanism (not shown) for rotatably holding a cutting tool 20 therein.

The column 12 depicted in the Figures is a so-called "bifurcated" column, in which the spindle carrier 19 is carried within a hollowed column 12 formed by upstanding side walls 12a, 12b connected by an overhead wall 12c. The spindle carrier 19 is guided on spaced-apart vertical ways in the form of one or more parallel spindle rails 21 mounted to the machine column 12 so that the carrier 19 may be driven along a substantially-vertical "Y"-axis direction, which is perpendicular to the "X"-axis direction and perpendicular to the "Z"-axis direction. The spindle carrier 19 is propelled in the "Y"-axis direction by a ballscrew assembly 22 and servomotor 23, in a conventional manner. Thus, the traditional, "X"-, "Y"- and "Z"-axis coordinate movements, necessary for moving the spindle 18 and the cutter 20 rotatably held thereby, relative to a workpiece 16, may be accomplished, for the purpose of performing machining operations on the workpiece 16. It will be apparent to those of skill in the art, upon reading the within description, that, in some systems, movement along the "Z"-axis may be provided within the spindle support structure. That is, "Z"-axis movement of the spindle 18 may be provided by an additional slide (not shown) mounted near the juncture of the machine base 11 and the column 12. Alternatively, the spindle 18 may be linearly carried inside a housing (not shown), via a conventional "ram"-style structure, which is well-known in the art.

A linear drive system 24 is provided for moving the column 12 along the rails 13. For example, a ballscrew 25 is rotatably affixed to the machine base 11, such as, by conventional bearings (not shown), and rotatably powered by a servomotor 26 at one end thereof. A non-rotatable nut 27 is fixedly secured to the machine column 12 in a well-known manner, such as, for example, by bolts (not shown). It will be apparent to those skilled in the art that, although the exemplary embodiment of the present invention has been described and shown in the Figures as being a bifurcated column, other types of machine tool columns may be used as well, for example, columns having side-mounted carriers, without departing from the scope of the present invention.

The machine column 12 has a center of mass CM vertically spaced a first distance 29 above the rails 13. The vertical position of the center of mass CM moves within a range, as the spindle carrier 19 changes its vertical position along the "Y"-axis of the column 12, and therefore, first distance 29 increases and decreases as the spindle carrier 19 moves away from, and towards, the base 11, respectively. As the column 12 is moved along the "X"-axis of the rails 13 at high acceleration and deceleration rates, inertial forces are created due to the center of mass CM being spaced over the rails 13 by first distance 29, which such inertial forces may tend to cause relative movement of the upper portion of the column 12, with respect to the base 11, when either "settling out" vibrations after a rapid move, or when the center of mass CM lags behind a sudden acceleration move applied to the column 12 at the ballscrew nut 27.

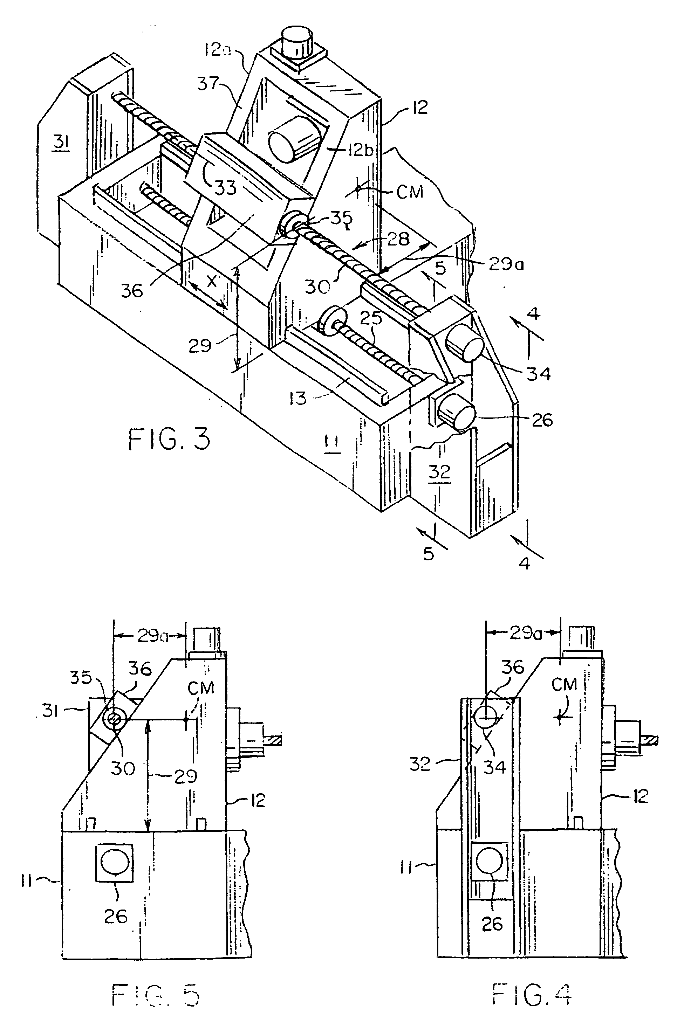

With reference to Figures 3-5, a drive mechanism 28 is attached to the base 11 and to the column 12 according to a preferred embodiment of the present invention such that the drive 28 is spaced from the center of mass CM of the column a second distance 29a which is less than the first distance 29 in order to obtain advanced control over the movement of the column 12 at high acceleration and deceleration rates, for example, near 1G or above. An elongated member, for example, a ballscrew 30, is affixed to stiff right and left end brackets 31, 32, respectively, attached to the base 11 and includes a substantially-horizontal longitudinal axis 33. A servomotor 34 is mounted to one end bracket, for example, the left end bracket 32, for rotating the ballscrew 30. A translating member, for example, a mating ball nut 35, non-rotatably engages the ballscrew 30 and is fixedly mounted to a nut mounting bracket 36, which, in turn, is secured to the column 12, for example, to a sloped rear surface 37 of the column 12. Rotation of the ballscrew 30, then, urges the ball nut 35 therealong, and thereby drives the column 12 along the "X"-axis. Preferably, the nut mounting bracket 36 spans the two upstanding walls 12a, 12b of the exemplary bifurcated column 12, and thereby also contributes to an increased stiffness of the column 12, particularly, in the "X"-axis direction of movement.

The ballscrew 30 may be provided alone or in combination with a conventional ballscrew drive 24 coupled to the lowermost end of the column 12 in a conventional fashion, as shown in Figures 1 and 2. That is, according to one preferred embodiment hereof, the column 12 is driven in parallel by the ballscrew 25 coupled to the lowermost end of the column 12 and by the ballscrew 30 coupled to the column 12 near the center of mass CM thereof. However, the ballscrew 25 may be decoupled from the column 12 (or otherwise removed from the machine tool 10), in which case, ballscrew 30, alone, drives the column 12 along the "X"-axis.

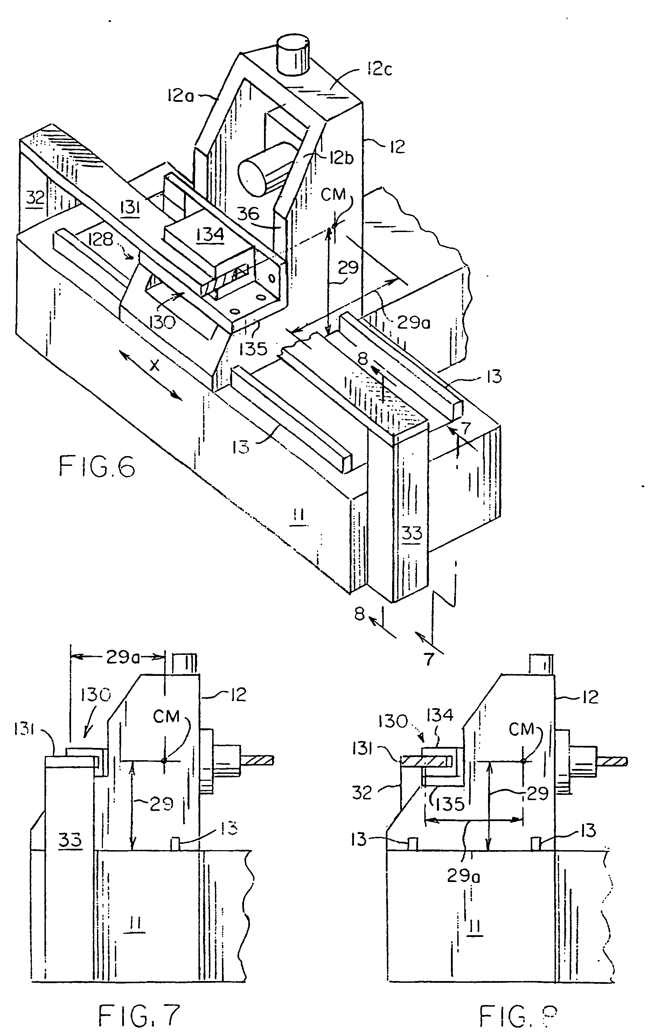

With reference to Figures 6-8, a drive mechanism 128 according to an alternative embodiment of the present invention replaces the ballscrew drive 28 of the preferred embodiment hereof. The drive mechanism 128 of the present embodiment includes a linear motor 130 having an elongated member, for example, a linear stator 131, fixedly mounted to the left and right end brackets 32, 31, respectively, and a translating member, for example, a linear rotor 134, fixedly mounted to the column 12, such as, for example, by a rotor bracket 135. The linear motor 130 is of conventional construction and is adapted to achieve high rates of acceleration between the rotor 134 and the stator 131 thereof. Because the linear motor 130 is capable of achieving the necessary thrust forces in order to drive the column 12 at preselected high rates of acceleration, for example, in excess of 1G, no additional drive (such as the ballscrew drive 24 shown in the preferred embodiment hereof) is necessary. However, the ballscrew drive 24 of the preferred embodiment hereof may be coupled to the column 12 in order to drive the column 12 along the "X"-axis, in parallel with the inertial linear motor drive 130, without departing from either the spirit or the scope of the present invention.

While the invention has been illustrated by referring to a number of preferred embodiments, and such preferred embodiments have been described in considerable detail with reference to the drawings, it is not the intention of applicants that the invention should be restricted to such detail.

The scope of the invention is defined by the appended claims.

## Claims

1. A machine tool (10), comprising:
a base (11) having a way support system (13);
a column (12) moveable along said way support system (13), so as to allow machining at different regions of a workpiece, said column (12) having a centre of mass (CM) spaced from said way support system (13) by a first distance (29); and
a drive mechanism (28, 128) for moving the column (12) along said way support system (13), the drive mechanism (28, 128) being coupled to said column (12) at a location thereon, said location being spaced from said centre of mass (CM) by a second distance (29a);
**characterized in that** said second distance (29a) is less than said first distance (29).

2. The machine tool (10) as set forth in claim 1, further **characterized in that** said drive mechanism (28, 128) is adapted to move said column (12) at a rate of acceleration in excess of about 32.2 ft/sec² (about 9.81m/sec²).

3. The machine tool (10) as set forth in claim 1, further **characterized in that** said drive mechanism (28, 128) comprises:
an elongated member (30, 131 ) mounted to said base (11); and
a translating member (35, 134) mounted to said column (12), said translating member (35, 134) engaging said elongated member (30, 131) for relative movement therealong;
wherein movement of said translating member (35, 134) along said elongated member (30, 131) moves said column (12) along said way support system (13).

4. The machine tool (10) as set forth in claim 3, further **characterized in that** said drive mechanism (28) is a ballscrew drive, wherein said elongated member (30) is a screw rotatably mounted to said base (11), and wherein said translating member (35) is a nut engaging said screw.

5. The machine tool (10) as set forth in claim 3, further **characterized in that** said drive mechanism (128) is a linear motor, wherein said elongated member (131) is a stator fixedly mounted to said base (11), and wherein said translating member (134) is a rotor fixedly mounted to said column (12).

6. The machine tool (10) as set forth in claim 1, further **characterized in that** said machine tool (10) further comprises a linear drive system (24) for driving said column (12) in parallel with said drive mechanism (28, 128).

7. The machine tool (10) as set forth in claim 1, further **characterized in that** said location is near said centre of mass (CM).

## Patentansprüche

1. Werkzeugmaschine (10) umfassend:
eine Basis (11) mit einem Laufbahnstützsystem (13);
eine Säule (12), die längs des Laufbahnstützsystems (13) beweglich ist, um ein Bearbeiten an verschiedenen Stellen eines Werkstückes zu ermöglichen, wobei die Säule (12) einen Schwerpunkt (CM) aufweist, der einen ersten Abstand (29) von dem Laufbahnstützsystem (13) hat; und
einen Antriebsmechanismus (28, 128) zum Bewegen der Säule (12) längs des Laufbahnstützsystems (13), wobei der Antriebsmechanismus (28, 128) mit der Säule an einem Ort der Säule verbunden ist, der von dem Schwerpunkt (CM) einen zweiten Abstand (29a) hat;
**dadurch gekennzeichnet, daß** der zweite Abstand (29a) kleiner als der erste Abstand (29) ist.

2. Werkzeugmaschine (10) nach Anspruch 1, **dadurch gekennzeichnet, daß** der Antriebsmechanismus (28, 128) die Säule (12) mit einer Beschleunigung von mehr als 32.2 ft/sec² (etwa 9.81m/sec²) bewegen kann.

3. Werkzeugmaschine (10) nach Anspruch 1, **dadurch gekennzeichnet, daß** der Antriebsmechanismus (28, 128) umfaßt:
ein langgestrecktes Bauteil (30, 131), das an der Basis (11) angebracht ist; und
ein Übertragungsteil (35, 134), das an der Säule (12) angebracht ist und mit dem langgestreckten Bauteil (30, 131) zu einer Relativbewegung längs desselben zusammenwirkt; wobei die Bewegung des Übertragungsteiles (35, 134) längs des langgestreckten Bauteils (30, 131) die Säule (12) längs des Laufbahnstützsystems (13) bewegt.

4. Werkzeugmaschine (10) nach Anspruch 3, **dadurch gekennzeichnet, daß** der Antriebsmechanismus (28) ein Kugelumlaufschraubenantrieb ist, wobei das langgestreckte Bauteil (30) eine drehbar an der Basis (11) angebrachte Schraubspindel ist und wobei das Übertragungsteil (35) eine mit der Schraube zusammenwirkende Mutter ist.

5. Werkzeugmaschine (10) nach Anspruch 3, **dadurch gekennzeichnet, daß** der Antriebsmechanismus (128) ein Linearmotor ist, wobei das langgestreckte Bauteil (131) ein fest an der Basis (11) montierter Stator ist und das Übertragungsteil (134) ein fest an der Säule (12) montierter Rotor ist.

6. Werkzeugmaschine (10) nach Anspruch 1, **dadurch gekennzeichnet, daß** sie ein lineares Antriebssystem (24) zum Antreiben der Säule (12) parallel zu dem Antriebsmechanismus (28, 128) umfaßt.

7. Werkzeugmaschine (10) nach Anspruch 1, **dadurch gekennzeichnet, daß** der Ort nahe dem Schwerpunkt (CM) gelegen ist.

## Revendications

1. Machine-outil (10), comportant :
une base (11) ayant un système de support et de guidage (13) ;
une colonne (12) mobile le long dudit système de support et de guidage (13), de manière à permettre un usinage à différents endroits d'une pièce de travail, ladite colonne (12) ayant un centre de masse (CM) espacé dudit système de support et de guidage (13) par une première distance (29) ; et
un mécanisme d'entraînement (28, 128) pour déplacer la colonne (12) le long dudit système de support et de guidage (13), le mécanisme d'entraînement (28, 128) étant couplé à ladite colonne (12) sur un emplacement de celle-ci, ledit emplacement étant espacé dudit centre de masse (CM) par une seconde distance (29a) ;
**caractérisée en ce que** ladite seconde distance (29a) est inférieure à la dite première distance (29).

2. Machine-outil (10) selon la revendication 1, en outre **caractérisée en ce que** ledit mécanisme d'entraînement (28, 128) est adapté pour déplacer ladite colonne (12) à un niveau d'accélération supérieur à environ 32.2 ft/sec² (environ 9.81m/sec²).

3. Machine-outil (10) selon la revendication 1, en outre **caractérisée en ce que** ledit mécanisme d'entraînement (28, 128) comporte :
un organe allongé (30, 131) monté sur ladite base (11) ; et
un organe de translation (35, 134) monté sur ladite colonne (12), ledit organe de translation (35, 134) s'engrenant sur ledit organe allongé (30, 131) pour un déplacement relatif le long de celui-ci ;
où le déplacement dudit organe de translation (35, 134) le long dudit organe allongé (30, 131) provoque le déplacement de ladite cotonne (12) le long dudit système de support et de guidage (13).

4. Machine-outil (10) selon la revendication 3, en outre **caractérisée en ce que** ledit mécanisme d'entraînement (28) est un entraînement à vis à billes, où ledit organe allongé (30) est une vis montée à rotation sur ladite base (11), et où ledit organe de translation (35) est un écrou s'engrenant sur ladite vis.

5. Machine-outil (10) selon la revendication 3, en outre **caractérisée en ce que** ledit mécanisme d'entraînement (128) est un moteur linéaire, où ledit organe allongé (131) est un stator monté fixement sur ladite base (11), et où ledit organe de translation (134) est un rotor monté fixement sur ladite colonne (12).

6. Machine-outil (10) selon la revendication 1, en outre **caractérisée en ce que** ladite machine-outil (10) comporte de plus un système d'entraînement linéaire (24) pour entraîner ladite colonne (12) en parallèle avec ledit mécanisme d'entraînement (28, 128).

7. Machine-outil (10) selon la revendication 1, en outre **caractérisée en ce que** ledit emplacement est proche dudit centre de masse (CM).
